# FASCICULE DE BREVET EUROPEEN

(11) **EP 3 969 813 B1**
(45) Date de publication et mention de la délivrance du brevet: **16.08.2023**
(21) Numéro de dépôt: 20730189.6
(22) Date de dépôt: 12.05.2020
(51) Int. Cl.: F23R 3/06, F23R 3/60, F02C 7/266

(54) **CHAMBRE DE COMBUSTION COMPRENANT DES MOYENS DE REFROIDISSEMENT D'UNE ZONE D'ENVELOPPE ANNULAIRE EN AVAL D'UNE CHEMINÉE**
BRENNKAMMER MIT MITTELN ZUR KÜHLUNG EINER RINGFÖRMIGEN MANTELZONE STROMABWÄRTS EINES ABZUGS
COMBUSTION CHAMBER COMPRISING MEANS FOR COOLING AN ANNULAR CASING ZONE DOWNSTREAM OF A CHIMNEY

(30) Priorité: 13.05.2019 FR 1904934
(43) Date de publication de la demande: 23.03.2022
(73) Titulaire: SAFRAN AIRCRAFT ENGINES, 75015 Paris (FR)
(72) Inventeur: LEPAROUX, Julien, Marc, Matthieu, 77550 MOISSY-CRAMAYEL (FR); PIEUSSERGUES, Christophe, 77550 MOISSY-CRAMAYEL (FR)
(74) Mandataire: Brevalex
(86) Numéro de dépôt international: PCT/EP2020/063202
(87) Numéro de publication internationale: WO 2020/229476

(56) Documents cités:
- FR-A- 1 398 352
- US-A1- 2002 170 293
- US-A1- 2007 051 110
- US-A1- 2011 120 132
- US-A1- 2017 292 707

## Description

### DOMAINE TECHNIQUE

La présente invention se rapporte au domaine des chambres de combustion des turbomachines, notamment les turbomachines utilisées pour la propulsion des aéronefs.

L'invention concerne plus particulièrement une chambre de combustion comportant au moins une enveloppe annulaire délimitant un volume interne de la chambre de combustion et pourvue d'une cheminée s'étendant à l'extérieur du volume interne et délimitant un passage pour une pièce pénétrante au travers de l'enveloppe annulaire, et, éventuellement, d'une douille montée flottante sur la cheminée.

### ÉTAT DE LA TECHNIQUE ANTÉRIEURE

La température interne des chambres de combustion est telle qu'il est en général nécessaire de refroidir les enveloppes annulaires qui délimitent le volume interne de ces chambres de combustion.

Une solution courante pour limiter l'échauffement d'une telle enveloppe annulaire consiste à faire circuler un film d'air relativement frais le long de l'enveloppe annulaire, au sein du volume interne de la chambre de combustion.

Un tel film d'air pariétal est en général formé au moyen d'une multitude de microperforations formées dans l'enveloppe annulaire, et par lesquelles de l'air relativement frais provenant d'un espace de contournement de la chambre de combustion s'introduit dans le volume interne de cette dernière.

Toutefois, dans les cas où l'enveloppe annulaire est pourvue d'une cheminée destinée au passage d'une pièce pénétrante, telle qu'une bougie d'allumage, au travers de l'enveloppe annulaire, la cheminée et la pièce pénétrante dégradent l'efficacité du refroidissement d'une zone de l'enveloppe annulaire située immédiatement en aval de cette cheminée.

En effet, la pièce pénétrante constitue, au sein du volume interne de la chambre de combustion, un obstacle interrompant le film d'air pariétal.

De plus, la région d'implantation de la cheminée dans l'enveloppe annulaire et le passage délimité par la cheminée constituent en eux-mêmes une région dépourvue de microperforations.

Enfin, à l'extérieur de la chambre de combustion, la cheminée constitue également un obstacle au flux d'air frais circulant dans l'espace de contournement de la chambre de combustion et alimentant les microperforations. Les microperforations éventuellement situées dans le sillage de la cheminée sont donc sous-alimentées en air de refroidissement.

Le document WO2015/049468A1 divulgue une cheminée d'enveloppe annulaire de chambre de combustion pourvue de conduits latéraux aptes à dévier, vers un plan axial médian de la cheminée, de l'air circulant autour de la cheminée dans l'espace de contournement de la chambre de combustion. Ce document divulgue également un déflecteur fixé sur un carter externe agencé autour d'une chambre de combustion, afin de dévier, vers l'enveloppe annulaire externe de la chambre de combustion, de l'air circulant dans l'espace de contournement de la chambre de combustion.

Ces solutions ne sont toutefois pas optimales en ce qui concerne le refroidissement de la zone située immédiatement en aval d'une cheminée.

Le document WO2018/050999A1 divulgue une cheminée pourvue d'un déflecteur agencé en regard de microperforations afin de participer à la formation d'un film d'air de refroidissement pariétal.

L'alimentation en air de ces microperforations n'est toutefois pas optimale du fait que la cheminée masque les microperforations vis-à-vis du flux d'air circulant dans l'espace de contournement de la chambre de

Le document US 2011/0120132 A1 divulgue une chambre de combustion selon le préambule de la revendication 1, à savoir une chambre de combustion pour turbomachine, comportant au moins une enveloppe annulaire délimitant un volume interne de la chambre de combustion et pourvue d'une cheminée s'étendant à l'extérieur du volume interne et délimitant un passage pour une pièce pénétrante au travers de l'enveloppe annulaire, et d'une douille montée flottante sur la cheminé.

### EXPOSÉ DE L'INVENTION

L'invention a notamment pour but d'apporter une solution simple, économique et efficace à ce problème, permettant d'éviter au moins en partie les inconvénients décrits ci-dessus.

À cet effet, la chambre de combustion comporte en outre une chambre de collecte d'air principale ouverte vers l'amont et fermée vers l'aval, agencée en regard d'une portion aval de la cheminée ; et au moins une ouverture traversante formée dans l'enveloppe annulaire et mettant en communication directe le volume interne de la chambre de combustion et la chambre de collecte d'air principale.

La chambre de collecte d'air principale permet de capter de l'air provenant de l'amont de la cheminée et de l'injecter, par l'intermédiaire de l'ouverture traversante, dans le volume interne de la chambre de combustion, où cet air permet un refroidissement de l'enveloppe annulaire.

Dans un mode de réalisation préféré de l'invention, la chambre de combustion comporte en outre un déflecteur agencé dans le volume interne de la chambre de combustion, raccordé à une région de l'enveloppe annulaire qui est plus proche d'un axe central de la cheminée que ne l'est l'ouverture traversante ou chaque ouverture traversante, et s'étendant en regard et au-delà de l'ouverture traversante ou de chaque ouverture traversante, moyennant quoi un espace de formation de film d'air de refroidissement pariétal, fermé vers l'amont et ouvert vers l'aval, est défini entre l'enveloppe annulaire et le déflecteur.

Le déflecteur permet de dévier l'air préalablement injecté dans le volume interne de la chambre de combustion par l'intermédiaire de l'ouverture traversante. Le déflecteur favorise ainsi, en combinaison avec l'ouverture traversante, la formation d'un film d'air de refroidissement pariétal circulant le long de l'enveloppe annulaire.

Suivant d'autres aspects avantageux de l'invention, la chambre de combustion présente une ou plusieurs des caractéristiques suivantes, prise(s) isolément ou suivant toutes les combinaisons techniquement possibles :
- le déflecteur comporte une partie proximale en forme de portion d'anneau par laquelle le déflecteur est raccordé à ladite région de l'enveloppe annulaire, et une partie distale libre s'étendant en regard et au-delà de l'ouverture traversante ou de chaque ouverture traversante ;
- la chambre de collecte d'air principale est en forme de portion d'anneau et présente deux extrémités circonférentielles respectives opposées ouvertes vers l'amont ;
- la chambre de collecte d'air principale est fermée du côté opposé à l'enveloppe annulaire ;
- la chambre de combustion comprend en outre une chambre de collecte d'air secondaire, ouverte vers l'amont et fermée vers l'aval, agencée en regard de la portion aval de la cheminée, et la portion aval de la cheminée comporte des orifices de passage d'air mettant en communication directe le passage et la chambre de collecte d'air secondaire ;
- la chambre de collecte d'air secondaire est en forme de portion d'anneau et présente deux extrémités circonférentielles respectives opposées ouvertes vers l'amont ;
- la chambre de collecte d'air secondaire est agencée entre la cheminée et une partie au moins de la chambre de collecte d'air principale ;
- l'enveloppe annulaire est formée au moins par une paroi annulaire pourvue d'un orifice, et une bride annulaire d'une pièce additionnelle, logée dans l'orifice de la paroi annulaire ; et la pièce additionnelle comporte en outre une paroi tubulaire formant la cheminée et à partir de laquelle la bride annulaire s'étend en s'éloignant de l'axe central de la cheminée, ladite bride annulaire comportant l'ouverture traversante ou chaque ouverture traversante ; et la pièce additionnelle comporte en outre la chambre de collecte d'air principale ;
- la pièce additionnelle comporte en outre ladite région de l'enveloppe annulaire à laquelle le déflecteur est raccordé, et le déflecteur ;
- la pièce additionnelle comporte en outre la chambre de collecte d'air secondaire.

L'invention concerne également une turbomachine pour aéronef, comprenant une chambre de combustion du type décrit ci-dessus, et une pièce pénétrante s'étendant au travers de la cheminée.

Dans des modes de réalisation de l'invention, la pièce pénétrante est une bougie d'allumage.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique partielle en coupe axiale d'une turbomachine pour aéronef ;
- la figure 2 est une demi-vue schématique partielle en coupe axiale d'une chambre de combustion de turbomachine d'un type connu ;
- la figure 3 est une vue schématique partielle de dessus d'une enveloppe annulaire externe de la chambre de combustion de la figure 2 ;
- la figure 4 est une vue schématique partielle en perspective et en coupe axiale d'une chambre de combustion de turbomachine selon un mode de réalisation préféré de l'invention ;
- la figure 5 est une vue schématique en perspective et en coupe axiale d'une pièce additionnelle faisant partie de la chambre de combustion de la figure 4 ;
- la figure 6 est une vue schématique de dessous de la pièce additionnelle de la figure 5 ;
- la figure 7 est une vue schématique en perspective de la pièce additionnelle de la figure 5.

Dans l'ensemble de ces figures, des références identiques peuvent désigner des éléments identiques ou analogues.

### EXPOSÉ DÉTAILLÉ DE MODES DE RÉALISATION PRÉFÉRÉS

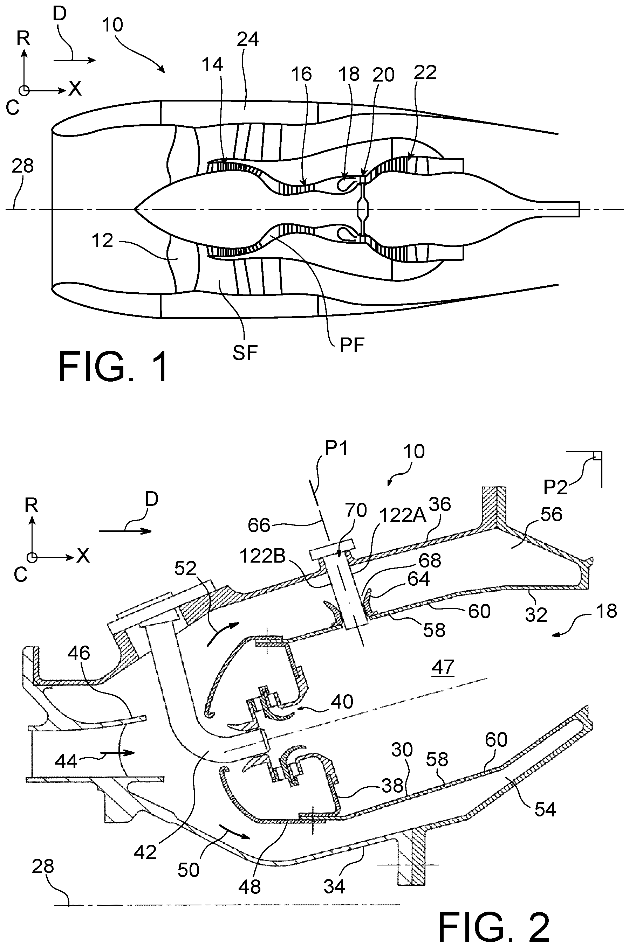

La figure 1 illustre une turbomachine 10 pour aéronef, comportant de manière générale une soufflante 12 destinée à l'aspiration d'un flux d'air se divisant en aval de la soufflante en un flux primaire circulant dans un canal d'écoulement de flux primaire, ci-après dénommé veine primaire PF, au sein d'un générateur de gaz, et un flux secondaire contournant ce générateur de gaz dans un canal d'écoulement de flux secondaire, ci-après dénommé veine secondaire SF.

La turbomachine est par exemple un turboréacteur à double flux et à double corps. Le générateur de gaz comporte ainsi, de manière générale, un compresseur basse pression 14, un compresseur haute pression 16, une chambre de combustion 18, une turbine haute pression 20 et une turbine basse pression 22. Les rotors respectifs du compresseur haute pression et de la turbine haute pression sont reliés par un arbre dit « arbre haute pression », tandis que les rotors respectifs du compresseur basse pression et de la turbine basse pression sont reliés par un arbre dit « arbre basse pression », d'une manière bien connue. La turbomachine est en outre carénée par une nacelle 24. Les différents rotors sont montés rotatifs autour d'un axe longitudinal 28 de la turbomachine.

Dans l'ensemble de cette description, la direction axiale X est la direction de l'axe longitudinal 28. Sauf lorsqu'il en est stipulé autrement, la direction radiale R est en tout point une direction orthogonale à l'axe longitudinal 28 et passant par ce dernier, et la direction circonférentielle ou tangentielle C est en tout point une direction orthogonale à la direction radiale R et à l'axe longitudinal 28. Sauf lorsqu'il en est stipulé autrement, les termes « interne » et « externe » font respectivement référence à une relative proximité, et un relatif éloignement, d'un élément par rapport à l'axe longitudinal 28. Enfin, les qualificatifs « amont » et « aval » sont définis par référence à la direction D de l'écoulement des gaz dans les veines primaire PF et secondaire SF de la turbomachine.

La figure 2 illustre à plus grande échelle la chambre de combustion 18 et son environnement immédiat, dans une configuration connue de l'art antérieur.

La chambre de combustion 18 comprend deux enveloppes annulaires coaxiales, respectivement interne 30 et externe 32, centrées par rapport à un axe longitudinal de la chambre de combustion, qui se confond avec l'axe longitudinal 28 de la turbomachine.

Ces deux enveloppes annulaires 30 et 32 sont fixées en aval à des carters interne 34 et externe 36 de la chambre de combustion, et sont reliées l'une à l'autre à leur extrémité amont par une enveloppe annulaire de fond de chambre 38 dans laquelle sont montés des systèmes d'injection 40 respectivement associés à une rangée annulaire d'injecteurs de carburant 42. Chaque système d'injection 40 comporte des ouvertures destinées à l'injection, dans la chambre de combustion, d'une partie médiane d'un flux d'air 44 provenant d'un diffuseur 46 monté en sortie du compresseur haute pression 16 de la turbomachine.

Les enveloppes annulaires 30, 32 et 38 délimitent ainsi un volume interne 47 de la chambre de combustion 18.

Par ailleurs, les enveloppes annulaires interne 30 et externe 32 de la chambre de combustion sont par exemple reliées à leur extrémité amont à un carénage annulaire 48 permettant de protéger l'enveloppe annulaire de fond de chambre 38 et les systèmes d'injection 40, et permettant de guider vers l'aval une partie radialement interne 50 du flux d'air 44, ci-après dénommée flux d'air de contournement interne, et une partie radialement externe 52 du flux d'air 44, ci-après dénommée flux d'air de contournement externe, respectivement le long des enveloppes annulaires interne 30 et externe 32, au sein d'espaces de contournement interne 54 et externe 56.

Les enveloppes annulaires interne 30 et externe 32 de la chambre de combustion comportent par exemple chacune des orifices d'entrée d'air 58 et 60 destinés à l'injection d'une partie du flux d'air de contournement interne 50 et d'une partie du flux d'air de contournement externe 52 dans les gaz enflammés au sein de la chambre de combustion.

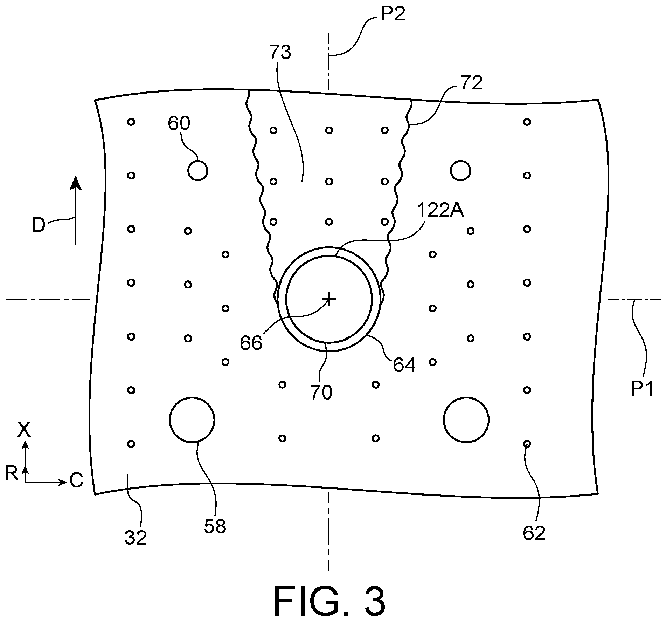

Les enveloppes annulaires coaxiales 30 et 32 sont en outre pourvues de nombreuses microperforations, réparties sensiblement sur toute la surface de ces parois, et destinées à créer un film d'air de refroidissement pariétal le long de chacune de ces parois au sein de la chambre de combustion 18. Ces microperforations ne sont pas représentées sur la figure 2 pour des raisons d'échelle, mais sont illustrées sur la figure 3, où ces microperforations, désignées par la référence 62, sont représentées plus grandes et réparties selon une densité moindre que dans la réalité. Les microperforations 62 ont en général des diamètres compris entre 0,3 et 0,6 mm environ, et sont, en tout état de cause, nettement plus petites que les orifices d'entrée d'air 58 et 60.

Par ailleurs, au moins l'une des enveloppes annulaires 30 et 32 comporte au moins une cheminée délimitant un passage pour une pièce pénétrante, telle qu'une bougie d'allumage, au travers de ladite enveloppe.

Par exemple, l'enveloppe annulaire externe 32 comporte ainsi une cheminée 64 s'étendant selon un axe central 66 par exemple localement orthogonal à l'enveloppe annulaire 32, et délimitant un passage 68 débouchant dans la chambre de combustion 18 et au travers duquel s'étend une bougie d'allumage 70 montée sur le carter externe 36. Une telle bougie d'allumage 70 est destinée à initier la combustion du mélange d'air et de carburant au sein de la chambre de combustion 18, au démarrage de la turbomachine. D'une manière connue en soi, l'étanchéité entre la bougie d'allumage 70, ou une pièce traversante analogue, et la cheminée 64, est avantageusement assurée au moyen d'une douille montée flottante dans la cheminée.

D'une manière générale, l'absence de microperforations dans la zone correspondant à la cheminée 64 et à son pourtour pénalise le refroidissement de cette zone de l'enveloppe annulaire concernée 32.

En outre, la bougie d'allumage 70 constitue, dans le volume interne 47 de la chambre de combustion, un obstacle de nature à interrompre un film d'air pariétal provenant de l'amont.

De plus, comme l'illustre schématiquement la figure 3, la cheminée 64 constitue, à l'extérieur de la chambre de combustion, un obstacle local à l'écoulement du flux d'air de contournement correspondant interne 50 ou externe 52, générant un sillage 72 dans ce flux d'air.

Un tel sillage 72 tend à réduire l'alimentation en air de microperforations situées dans la zone 73 de l'enveloppe annulaire 32 située au droit du sillage 72, immédiatement en aval de la cheminée, et donc à empêcher un bon refroidissement de cette zone.

La présence de la cheminée 64, et, le cas échéant, de la bougie d'allumage 70, est de ce fait susceptible d'occasionner, au sein de l'enveloppe annulaire 32, des gradients thermiques élevés, de l'ordre de plusieurs centaines de degrés Celsius, sur une distance très faible, de l'ordre de quelques millimètres. De tels gradients thermiques se traduisent en général par un amoindrissement de la durée de vie de l'enveloppe annulaire 32.

D'autres types de pièces pénétrantes, tels que des injecteurs de démarrage, peuvent provoquer des problèmes analogues.

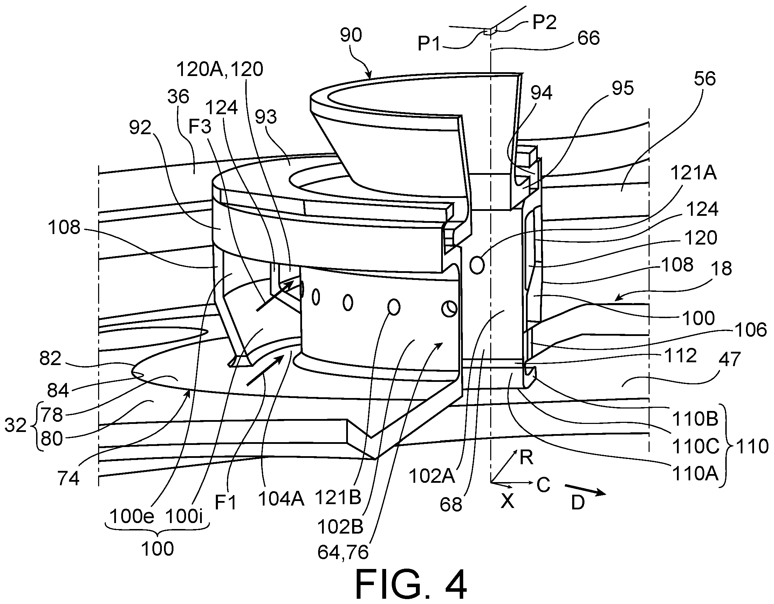

L'invention, qui va être décrite en référence aux figures 4 à 7, permet de remédier au moins en partie au problème décrit ci-dessus.

Les figures 4 à 7 illustrent partiellement la chambre de combustion 18, dans une configuration conforme à un mode de réalisation préféré de l'invention.

La figure 4 montre en particulier l'enveloppe annulaire externe 32 pourvue de la cheminée 64 qui s'étend vers l'extérieur de la chambre de combustion 18, à partir de l'enveloppe annulaire 32, en délimitant le passage 68 pour la pièce pénétrante (cette pièce pénétrante n'étant pas visible sur les figures 4-7 pour plus de clarté). La description qui suit concerne un exemple dans lequel la pièce pénétrante est une bougie d'allumage. Cette description est néanmoins directement transposable à d'autres types de pièces pénétrantes tels que ceux indiqués ci-dessus.

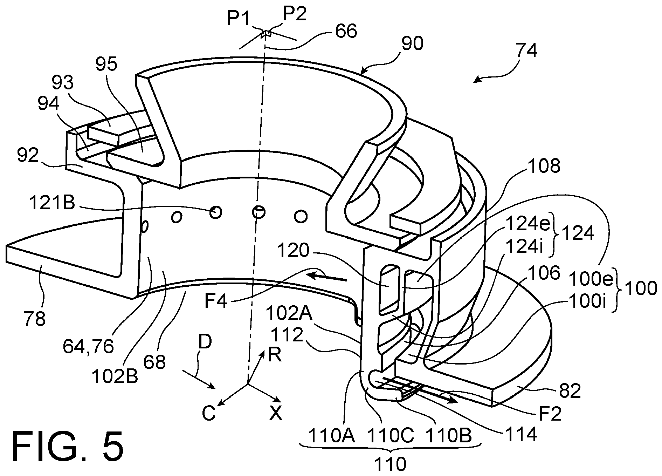

Dans l'exemple illustré, la cheminée 64 est formée dans une pièce additionnelle 74, représentée seule sur les figures 5-7.

Cette pièce additionnelle comporte notamment une paroi tubulaire 76 formant la cheminée 64, et une bride annulaire 78 s'étendant à partir de la paroi tubulaire 76 en s'éloignant de l'axe central 66, par exemple transversalement à la paroi tubulaire 76 (figures 4-7).

L'enveloppe annulaire 32 est ainsi formée par une paroi annulaire 80, et par la bride annulaire 78, par laquelle la pièce additionnelle 74 est fixée sur la paroi annulaire 80. Cette bride annulaire 78 présente en particulier un bord périphérique 82 raccordé à un bord interne 84 d'un orifice de la paroi annulaire 80 (figure 4).

La cheminée 64 est avantageusement pourvue d'une douille 90 (figures 4 et 5) montée flottante dans la cheminée 64, par exemple dans l'extrémité radialement externe de cette dernière, et destinée à assurer le contact avec la bougie d'allumage en évitant les fuites d'air entre la cheminée 64 et la bougie d'allumage. À cet effet, la cheminée 64 comporte par exemple une collerette 92 agencée à l'extrémité radialement externe de la cheminée et délimitant, par exemple avec une rondelle 93, une gorge annulaire 94 débouchant vers l'axe central 66 de la cheminée. De plus, la douille 90 comporte une bride d'extrémité 95 engagée dans la gorge annulaire 94 avec un jeu transversal à l'axe central 66.

La pièce additionnelle 74 comporte en outre une chambre de collecte d'air principale 100 (figures 4 et 5) agencée autour d'une portion aval 102A de la cheminée 64 (figure 5) et configurée pour collecter un flux d'air F1 (figure 4) incident sur la cheminée 64 depuis l'amont, et injecter cet air dans le volume interne 47 de la chambre de combustion de telle sorte que cet air forme un film pariétal F1 (figure 5) permettant le refroidissement de la zone de l'enveloppe annulaire 32 située immédiatement en aval de la cheminée 64 (c'est-à-dire la zone 73 située au droit du sillage 72, en référence à la figure 3), comme cela apparaîtra plus clairement dans ce qui suit.

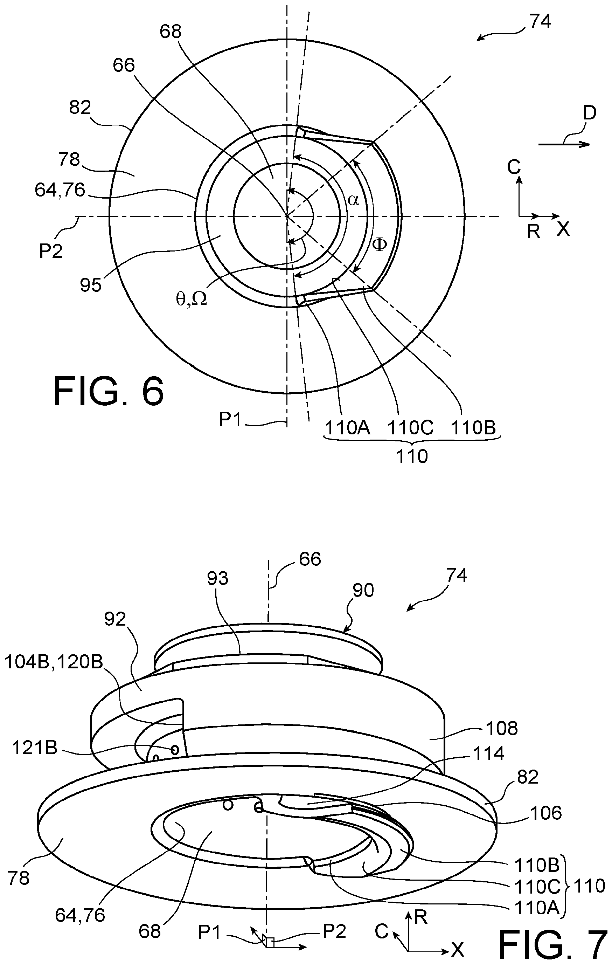

À cet effet, la chambre de collecte d'air principale 100 est ouverte vers l'amont. La chambre de collecte d'air principale 100 est par exemple en forme de portion d'anneau avec deux extrémités circonférentielles respectives 104A (figure 4) et 104B (figure 7) opposées ouvertes vers l'amont. La chambre de collecte d'air principale 100 présente une étendue angulaire, illustrée par l'angle θ sur la figure 6, préférentiellement comprise entre 120 degrés et 240 degrés, par rapport à l'axe central 66 de la cheminée. Dans l'exemple préférentiel illustré, cette étendue angulaire est égale à 180 degrés, moyennant quoi les extrémités circonférentielles respectives 104A, 104B de la chambre de collecte d'air principale 100 sont diamétralement opposées. Les extrémités circonférentielles respectives 104A, 104B sont ainsi définies dans un plan P1 qui comprend l'axe central 66 de la cheminée et qui est orthogonal à un plan axial P2 de la chambre de combustion comprenant également l'axe central 66 de la cheminée (le plan axial P2 correspondant au plan de la figure 2).

De plus, la bride annulaire 78 comporte au moins une ouverture traversante 106 (figures 5 et 7) mettant en communication directe le volume intérieur 47 de la chambre de combustion 18 (figure 4) et la chambre de collecte d'air principale 100 (figures 4 et 5). L'ouverture traversante 106 ou chaque ouverture traversante 106 est ainsi, plus généralement, formée dans l'enveloppe annulaire 32.

Autrement dit, la chambre de collecte d'air principale 100 est délimitée par une portion de la bride annulaire 78 comportant l'ouverture traversante 106 ou chaque ouverture traversante 106.

Dans l'exemple illustré, la bride annulaire 78 comporte une unique ouverture traversante 106 prenant la forme d'une fente incurvée autour de l'axe central 66 de la cheminée. En variante, la bride annulaire 78 peut comporter une pluralité d'ouvertures traversantes séparées les unes des autres, par exemple chacune en forme d'orifice à section circulaire.

La chambre de collecte d'air principale 100 est en outre délimitée par une paroi externe 108 pleine (figures 4, 5 et 7) s'étendant en regard et à distance de la portion aval 102A de la cheminée 64 (figures 4 et 5). Cette paroi externe 108 ferme ainsi la chambre de collecte d'air principale 100 vers l'aval.

Dans l'exemple illustré, la paroi externe 108 relie la bride annulaire 78 à la collerette 92, moyennant quoi la chambre de collecte d'air principale 100 s'étend jusqu'à la collerette 92. La chambre de collecte d'air principale 100 est ainsi fermée du côté opposé à l'enveloppe annulaire 32, c'est-à-dire du côté radialement externe. Dans l'exemple illustré, la fermeture de la chambre de collecte d'air principale 100 du côté opposé à l'enveloppe annulaire 32 est assurée par la collerette 92.

Dans le mode de réalisation préféré de l'invention, la pièce additionnelle 74 comporte en outre un déflecteur 110 s'étendant dans le volume intérieur 47 de la chambre de combustion (figure 4). Plus précisément, le déflecteur 110 s'étend en regard de l'ouverture traversante 106 et au-delà de celle-ci (figure 5), à partir d'une région 112 de la bride annulaire 78 (et donc de l'enveloppe annulaire 32) qui est plus proche de l'axe central 66 de la cheminée 64 que ne l'est l'ouverture traversante 106 (figures 4 et 5). Ainsi, un espace 114 de formation de film d'air de refroidissement pariétal (figures 5 et 7), fermé vers l'amont et ouvert vers l'aval, est défini entre la bride annulaire 78 (et donc l'enveloppe annulaire 32) et le déflecteur 110.

Le déflecteur 110 comporte une partie proximale 110A (figures 5 et 7) en forme de portion d'anneau, par laquelle le déflecteur 110 est raccordé à la région 112 de la bride annulaire 78 (ou, plus généralement, de l'enveloppe annulaire 32), et une partie distale libre 110B (figures 5, 6 et 7) s'étendant en regard de l'ouverture traversante 106 et au-delà de celle-ci.

Dans l'exemple préférentiel illustré, la partie distale libre 110B s'étend de manière sensiblement parallèle à la bride annulaire 78 (et donc à l'enveloppe annulaire 32). Plus généralement, la partie distale libre 110B forme avantageusement un angle inférieur à 30 degrés avec l'enveloppe annulaire 32, dans une vue en section selon le plan axial P2.

De plus, dans l'exemple préférentiel illustré, le déflecteur 110 comporte une partie médiane 110C recourbée vers l'aval, qui raccorde la partie distale libre 110B à la partie proximale 110A du déflecteur.

La partie proximale 110A du déflecteur présente une étendue angulaire α par rapport à l'axe central 66 qui est de préférence inférieure ou égale à 180 degrés (figure 6).

Dans l'exemple illustré, l'ouverture traversante 106 présente une étendue angulaire, définie par rapport à l'axe central 66, qui est inférieure à celle de la partie proximale 110A du déflecteur, comme cela apparaît sur la figure 7. Cela permet de maximiser la proportion de l'air, issu de l'ouverture traversante 106, qui est déviée vers l'aval par le déflecteur 110.

La partie distale libre 110B du déflecteur 110 présente par exemple une extrémité libre dont l'étendue angulaire φ, définie par rapport à l'axe central 66, est inférieure à l'étendue angulaire α de la partie proximale 110A (figure 6).

Ainsi, la partie distale libre 110B du déflecteur 110 est agencée essentiellement en regard de la zone de l'enveloppe annulaire 32 située en aval de la cheminée 64 (c'est-à-dire la zone 73 située au droit du sillage 72, visible sur la figure 2), ce qui permet de maximiser le refroidissement de cette zone par le film d'air de refroidissement pariétal formé dans l'espace 114.

Dans le mode de réalisation illustré, la pièce additionnelle 74 comporte en outre une chambre de collecte d'air secondaire 120 agencée en regard de la portion aval 102A de la cheminée 64 (figures 4 et 5) et configurée pour collecter un flux d'air F3 (figure 4) incident sur la cheminée 64 depuis l'amont. De plus, la portion aval 102A de la cheminée 64 comporte des orifices de passage d'air 121A (figure 4) mettant en communication directe le passage 68, délimité par la cheminée, et la chambre de collecte d'air secondaire 120, afin de permettre à de l'air issu de la chambre de collecte d'air secondaire 120 de pénétrer dans le passage 68 (figure 5 : F4) et de refroidir ainsi un côté aval 122A de la bougie d'allumage (figures 2 et 3).

Afin d'être alimentée en air, la chambre de collecte d'air secondaire 120 est ouverte vers l'amont. À cet effet, la chambre de collecte d'air secondaire 120 est par exemple en forme de portion d'anneau avec deux extrémités circonférentielles 120A, 120B respectives opposées ouvertes vers l'amont (figures 4 et 5).

Les extrémités circonférentielles 120A, 120B respectives de la chambre de collecte d'air secondaire 120 sont avantageusement dans le même plan que les extrémités circonférentielles 104A, 104B respectives de la chambre de collecte d'air principale 100, et sont donc également diamétralement opposées.

Dans l'exemple illustré, les deux extrémités circonférentielles 120A, 120B respectives de la chambre de collecte d'air secondaire 120 sont donc définies dans le plan P1.

Dans des modes de réalisation alternatifs, les extrémités circonférentielles 120A, 120B respectives de la chambre de collecte d'air secondaire 120 sont décalées vers l'amont à l'extérieur de la chambre de collecte d'air principale 100.

Dans d'autres modes de réalisation alternatifs, les extrémités circonférentielles 120A, 120B respectives de la chambre de collecte d'air secondaire 120 sont décalées vers l'aval à l'intérieur de la chambre de collecte d'air principale 100.

Plus généralement, la chambre de collecte d'air secondaire 120 présente de préférence une étendue angulaire, illustrée par l'angle Ω sur la figure 6, comprise entre 120 degrés et 240 degrés par rapport à l'axe central 66 de la cheminée.

La chambre de collecte d'air secondaire 120 est agencée entre la cheminée 64 et une partie de la chambre de collecte d'air principale 100.

Plus précisément, en référence aux figures 4 et 5, la chambre de collecte d'air principale 100 comporte une partie interne 100i s'étendant à partir de la paroi externe 108 jusqu'à la paroi tubulaire 76 (ou, plus généralement, jusqu'à la cheminée 64) et délimitée par la bride annulaire 78 (ou, plus généralement, par l'enveloppe annulaire 32), et une partie externe 100e s'étendant à partir de la paroi externe 108 jusqu'à une cloison 124, et délimitée par la collerette 92. La cloison 124 est agencée entre la paroi externe 108 et la cheminée 64, et la chambre de collecte d'air secondaire 120 est formée entre la cheminée 64 et la cloison 124. La cloison 124 ferme ainsi la chambre de collecte d'air secondaire 120 vers l'aval.

Par exemple, la cloison 124 comporte une partie externe 124e s'étendant coaxialement à la paroi tubulaire 76 en direction de la bride annulaire 78 à partir de la collerette 92, et une partie interne 124i reliant la partie externe à la paroi tubulaire 76.

Cet agencement particulier permet que l'ouverture traversante 106 soit agencée au plus près de la cheminée 64, au droit de la chambre de collecte d'air secondaire 120 selon la direction de l'axe central 66 de la cheminée, ce qui permet d'éviter l'existence d'une région non refroidie de l'enveloppe annulaire 32 immédiatement en aval de la cheminée 64.

Par ailleurs, la cheminée 64 comporte par exemple d'autres orifices de passage d'air 121B, formés dans une portion amont 102B de la cheminée 64 (figures 4-6), définie à l'extérieur de l'angle θ et de l'angle Ω de la figure 6, c'est-à-dire en amont de la région de la cheminée 64 située en regard des chambres de collecte d'air principale 100 et secondaire 120. Ces orifices 121B permettent ainsi le refroidissement d'un côté amont 122B de la bougie d'allumage (figure 3) par de l'air incident sur la portion amont 102B de la cheminée 64. Dans l'exemple illustré, les orifices 121A et les autres orifices 121B forment ensemble une rangée annulaire d'orifices régulièrement répartis autour de l'axe central 66.

En fonctionnement, le flux d'air F1 relativement frais provenant de l'amont (figure 4) est capté par les extrémités circonférentielles 104A, 104B respectives de la chambre de collecte d'air principale 100 et contourne la cheminée 64 en circulant au sein de cette chambre de collecte d'air principale 100 puis s'échappe de cette dernière par l'ouverture traversante 106, par laquelle l'air pénètre dans l'espace 114. L'air est alors dévié vers l'aval par le déflecteur 110 moyennant quoi l'air forme un film d'air de refroidissement pariétal F2 (figure 5) circulant vers l'aval le long de la face intérieure de l'enveloppe annulaire 32. L'air permet ainsi de refroidir efficacement la zone de l'enveloppe annulaire 32 située immédiatement en aval de la cheminée 64 (c'est-à-dire la zone 73 située au droit du sillage 72).

Par ailleurs, le flux d'air F3 relativement frais provenant de l'amont (figure 4) est capté par les extrémités circonférentielles 120A, 120B respectives de la chambre de collecte d'air secondaire 120 et contourne la cheminée 64 en circulant au sein de cette chambre de collecte d'air secondaire 120 puis pénètre dans le passage 68 par les orifices de passage d'air 121A. Le flux d'air F4 centripète issu de ces orifices (figure 5) permet le refroidissement du côté aval 122A de la bougie d'allumage (figures 2 et 3).

La séparation des flux d'air F1 et F3 par la cloison 124 permet d'assurer une alimentation homogène des orifices de passage d'air 121A tout en maîtrisant le débit du flux d'air F1 destiné à former le film d'air de refroidissement pariétal F2.

En variante, la paroi annulaire 80 et les éléments décrits ci-dessus comme appartenant à la pièce additionnelle 74 peuvent être réalisés d'un seul tenant. Ces éléments sont en particulier la cheminée 64, la bride annulaire 78, la chambre de collecte d'air principale 100, et, le cas échéant, le déflecteur 110, et la chambre de collecte d'air secondaire 120.

Par ailleurs, la configuration décrite ci-dessus en relation avec l'enveloppe annulaire externe 32 délimitant extérieurement le volume interne 47 de la chambre de combustion peut, en variante ou de manière complémentaire, être appliquée au refroidissement de l'enveloppe interne 30 qui délimite intérieurement ce volume interne 47.

De manière analogue, dans les cas où l'enveloppe annulaire de fond de chambre 38 comporte des extrémités radiales incurvées vers l'aval, la pièce additionnelle 74 peut être rapportée dans un orifice de cette enveloppe annulaire de fond de chambre 38, ou, en variante, les éléments décrits ci-dessus comme appartenant à la pièce additionnelle 74 peuvent être intégrés à cette enveloppe annulaire de fond de chambre 38.

Dans le mode de réalisation illustré, la chambre de collecte d'air principale 100 et l'ouverture traversante 106 sont centrés par rapport au plan axial P2. Il en est de même en ce qui concerne le déflecteur 110 et la chambre de collecte d'air secondaire 120.

Une telle configuration est optimale dans le cas où le flux d'air 44 provenant d'un diffuseur 46 est un flux d'air axial, c'est-à-dire dépourvu de composante giratoire, moyennant quoi le sillage 72 est centré par rapport au plan axial P2.

En variante, dans les cas où le flux d'air 44 présente une composante giratoire en sortie du diffuseur 46, moyennant quoi le sillage 72 est incliné par rapport au plan axial P2, la chambre de collecte d'air principale 100, l'ouverture traversante 106 et, le cas échéant, le déflecteur 110, l'espace 114 de formation de film d'air de refroidissement pariétal, et la chambre de collecte d'air secondaire 120, peuvent être centrés par rapport à un plan incliné par rapport au plan axial P2 et comprenant l'axe central 66 de la cheminée 64. L'écoulement du flux d'air 44 étant dans ce cas localement incliné par rapport à la direction axiale X, les qualificatifs « amont » et « aval », appliqués à la définition de la chambre de collecte d'air 100 et, le cas échéant, de l'espace 114 de formation de film d'air de refroidissement pariétal, et de la chambre de collecte d'air secondaire 120, sont définis par référence à la direction locale inclinée de l'écoulement du flux d'air 44.

Dans ce qui précède, l'expression « comportant un » doit être comprise comme étant synonyme de « comportant au moins un », sauf si le contraire est spécifié.

## Revendications

1. Chambre de combustion (18) pour turbomachine, comportant au moins une enveloppe annulaire (32) délimitant un volume interne (47) de la chambre de combustion et pourvue d'une cheminée (64) s'étendant à l'extérieur du volume interne et délimitant un passage (68) pour une pièce pénétrante au travers de l'enveloppe annulaire, et d'une douille (90) montée flottante sur la cheminée (64),
**caractérisée en ce qu'**elle comporte en outre :
- une chambre de collecte d'air principale (100), ouverte vers l'amont et fermée vers l'aval, agencée en regard d'une portion aval (102A) de la cheminée ; et
- au moins une ouverture traversante (106) formée dans l'enveloppe annulaire (32) et mettant en communication directe le volume interne (47) de la chambre de combustion et la chambre de collecte d'air principale (100).

2. Chambre de combustion selon la revendication 1, comprenant en outre un déflecteur (110) agencé dans le volume interne (47) de la chambre de combustion, raccordé à une région (112) de l'enveloppe annulaire qui est plus proche d'un axe central (66) de la cheminée (64) que ne l'est l'ouverture traversante (106) ou chaque ouverture traversante, le déflecteur (110) s'étendant en regard et au-delà de l'ouverture traversante (106) ou de chaque ouverture traversante, moyennant quoi un espace (114) de formation de film d'air de refroidissement pariétal, fermé vers l'amont et ouvert vers l'aval, est défini entre l'enveloppe annulaire (32) et le déflecteur (110).

3. Chambre de combustion selon la revendication 2, dans laquelle le déflecteur (110) comporte une partie proximale (110A) en forme de portion d'anneau par laquelle le déflecteur est raccordé à ladite région (112) de l'enveloppe annulaire (32), et une partie distale libre (110B) s'étendant en regard et au-delà de l'ouverture traversante (106) ou de chaque ouverture traversante.

4. Chambre de combustion selon l'une quelconque des revendications 1 à 3, dans laquelle la chambre de collecte d'air principale (100) est en forme de portion d'anneau et présente deux extrémités circonférentielles respectives (104A, 104B) opposées ouvertes vers l'amont.

5. Chambre de combustion selon l'une quelconque des revendications 1 à 4, dans laquelle la chambre de collecte d'air principale (100) est fermée du côté opposé à l'enveloppe annulaire (32).

6. Chambre de combustion selon l'une quelconque des revendications 1 à 5, comprenant en outre une chambre de collecte d'air secondaire (120), ouverte vers l'amont et fermée vers l'aval, agencée en regard de la portion aval (102A) de la cheminée (64), et dans laquelle la portion aval (102A) de la cheminée comporte des orifices de passage d'air (121A) mettant en communication directe le passage (68) et la chambre de collecte d'air secondaire (120).

7. Chambre de combustion selon la revendication 6, dans laquelle la chambre de collecte d'air secondaire (120) est en forme de portion d'anneau et présente deux extrémités circonférentielles respectives (120A, 120B) opposées ouvertes vers l'amont.

8. Chambre de combustion selon la revendication 6 ou 7, dans laquelle la chambre de collecte d'air secondaire (120) est agencée entre la cheminée (64) et une partie au moins de la chambre de collecte d'air principale (100).

9. Chambre de combustion selon l'une quelconque des revendications 1 à 8, dans laquelle l'enveloppe annulaire (32) est formée au moins par :
- une paroi annulaire (80) pourvue d'un orifice, et
- une bride annulaire (78) d'une pièce additionnelle (74), logée dans l'orifice de la paroi annulaire (80), et
dans laquelle la pièce additionnelle (74) comporte en outre au moins :
- une paroi tubulaire (76) formant la cheminée (64), et à partir de laquelle la bride annulaire (78) s'étend en s'éloignant de l'axe central (66) de la cheminée, ladite bride annulaire (78) comportant l'ouverture traversante (106) ou chaque ouverture traversante, et
- la chambre de collecte d'air principale (100).

10. Chambre de combustion selon la revendication 9 prise en combinaison avec la revendication 2 ou 3, dans laquelle la pièce additionnelle (74) comporte en outre ladite région (112) de l'enveloppe annulaire à laquelle le déflecteur (110) est raccordé, et le déflecteur (110).

11. Chambre de combustion selon l'une quelconque des revendications 9 et 10, prise en combinaison avec l'une quelconque des revendications 6 à 8, dans laquelle la pièce additionnelle (74) comporte en outre la chambre de collecte d'air secondaire (120).

12. Turbomachine pour aéronef, comprenant une chambre de combustion (18) selon l'une quelconque des revendications 1 à 11, et une pièce pénétrante s'étendant au travers de la cheminée (64).

13. Turbomachine selon la revendication 12, dans laquelle la pièce pénétrante est une bougie d'allumage (70).

## Patentansprüche

1. Brennkammer (18) für ein Turbotriebwerk, die mindestens einen ringförmigen Mantel (32) beinhaltet, der ein Innenvolumen (47) der Brennkammer begrenzt, und mit einem Kamin (64), der sich außerhalb des Innenvolumens erstreckt, und einen Durchlass (68) für ein eindringendes Teil durch den ringförmigen Mantel hindurch begrenzt, und einer Hülse (90) versehen ist, die schwimmend auf dem Kamin (64) montiert ist,
**dadurch gekennzeichnet, dass** sie weiter beinhaltet:
- eine Hauptluftsammelkammer (100), die nach stromaufwärts offen, und nach stromabwärts geschlossen ist, gegenüber einem stromabwärts gelegenen Abschnitt (102A) des Kamins angeordnet; und
- mindestens eine Durchgangsöffnung (106), die in dem ringförmigen Mantel (32) gebildet ist, und das Innenvolumen (47) der Brennkammer und die Hauptluftsammelkammer (100) in direkte Kommunikation versetzt.

2. Brennkammer nach Anspruch 1, weiter einen Abweiser (110) umfassend, der in dem Innenvolumen (47) der Brennkammer angeordnet ist, an einen Bereich (112) des ringförmigen Mantels angeschlossen ist, welcher einer zentralen Achse (66) des Kamins (64) näher liegt, als es die Durchgangsöffnung (106) oder eine jede Durchgangsöffnung tut, wobei sich der Abweiser (110) gegenüber und über die Durchgangsöffnung (106) oder jede Durchgangsöffnung hinaus erstreckt, wodurch ein parietaler Raum (114) zur Bildung eines Kühlluftfilms, der nach stromaufwärts geschlossen, und nach stromabwärts offen ist, zwischen dem ringförmigen Mantel (32) und dem Abweiser (110) definiert wird.

3. Brennkammer nach Anspruch 2, wobei der Abweiser (110) einen proximalen Teil (110A) in Form eines Ringabschnitts, durch den der Abweiser an den Bereich (112) des ringförmigen Mantels (32) angeschlossen ist, und einen freien distalen Teil (110B) beinhaltet, der sich gegenüber und über die Durchgangsöffnung (106) oder jede Durchgangsöffnung hinaus erstreckt.

4. Brennkammer nach einem der Ansprüche 1 bis 3, wobei die Hauptluftsammelkammer (100) in Form eines Ringabschnitts ist, und zwei jeweilige gegenüberliegende Umfangsenden (104A, 104B) aufweist, die nach stromaufwärts offen sind.

5. Brennkammer nach einem der Ansprüche 1 bis 4, wobei die Hauptluftsammelkammer (100) auf der dem ringförmigen Mantel (32) gegenüberliegenden Seite geschlossen ist.

6. Brennkammer nach einem der Ansprüche 1 bis 5, weiter eine Sekundärluftsammelkammer (120) umfassend, die nach stromaufwärts offen ist, und nach stromabwärts geschlossen ist, gegenüber dem stromabwärts gelegenen Abschnitt (102A) des Kamins (64) angeordnet ist, und in der der stromabwärts gelegene Abschnitt (102A) des Kamins Luftdurchlassöffnungen (121A) beinhaltet, die den Durchlass (68) und die Sekundärluftsammelkammer (120) in direkte Kommunikation versetzen.

7. Brennkammer nach Anspruch 6, wobei die Sekundärluftsammelkammer (120) in Form eines Ringabschnitts ist, und zwei jeweilige gegenüberliegende Umfangsenden (120A, 120B) aufweist, die nach stromaufwärts offen sind.

8. Brennkammer nach Anspruch 6 oder 7, wobei die Sekundärluftsammelkammer (120) zwischen dem Kamin (64) und mindestens einem Teil der Hauptluftsammelkammer (100) angeordnet ist.

9. Brennkammer nach einem der Ansprüche 1 bis 8, wobei der ringförmige Mantel (32) mindestens gebildet wird durch:
- eine ringförmige Wand (80), die mit einer Öffnung versehen ist, und
- einen ringförmigen Flansch (78) aus einem zusätzlichen Teil (74), das in der Öffnung der ringförmigen Wand (80) ausgenommen ist, und
wobei das zusätzliche Teil (74) weiter mindestens Folgendes beinhaltet:
- eine ringförmige Wand (76), die den Kamin (64) bildet, und aus der sich der ringförmige Flansch (78) erstreckt, und sich dabei von der zentralen Achse (66) des Kamins entfernt, wobei der ringförmige Flansch (78) die Durchgangsöffnung (106) oder jede Durchgangsöffnung beinhaltet, und
- die Hauptluftsammelkammer (100).

10. Brennkammer nach Anspruch 9, in Kombination mit Anspruch 2 oder 3, wobei das zusätzliche Teil (74) weiter den Bereich (112) des ringförmigen Mantels, an dem der Abweiser (110) angeschlossen ist, und den Abweiser (110) beinhaltet.

11. Brennkammer nach einem der Ansprüche 9 und 10, in Kombination mit einem der Ansprüche 6 bis 8, wobei das zusätzliche Teil (74) weiter die Sekundärluftsammelkammer (120) beinhaltet.

12. Turbotriebwerk für ein Luftfahrzeug, umfassend eine Brennkammer (18) nach einem der Ansprüche 1 bis 11, und ein eindringendes Teil, das sich durch den Kamin (64) hindurch erstreckt.

13. Turbotriebwerk nach Anspruch 12, wobei das eindringende Teil eine Zündkerze (70) ist.

## Claims

1. Combustion chamber (18) for a turbomachine, comprising at least one annular casing (32) delimiting an inner volume (47) of the combustion chamber and provided with a chimney (64) extending to the outside of the inner volume and delimiting a passage (68) for a penetrating part through the annular casing, and a bushing (90) mounted floating on the chimney (64),
**characterised in that** it further comprises:
- a main air collection chamber (100), open to the upstream and closed to the downstream, arranged facing a downstream portion (102A) of the chimney; and
- at least one through-opening (106) formed in the annular casing (32) and putting into direct communication the inner volume (47) of the combustion chamber and the main air collection chamber (100).

2. Combustion chamber according to claim 1, further comprising a deflector (110) arranged in the inner volume (47) of the combustion chamber, connected to a region (112) of the annular casing that is closer to a central axis (66) of the chimney (64) than the through-opening (106) or each through-opening, the deflector (110) extending facing and beyond the through-opening (106) or each through-opening, whereupon a space (114) of formation of parietal cooling air film, closed to the upstream and open to the downstream, is defined between the annular casing (32) and the deflector (110).

3. Combustion chamber according to claim 2, wherein the deflector (110) comprises a proximal portion (110A) in the form of a ring portion through which the deflector is connected to said region (112) of the annular casing (32), and a free distal portion (110B) extending facing and beyond the through-opening (106) or each through-opening.

4. Combustion chamber according to any of claims 1 to 3, wherein the main air collection chamber (100) is in the form of a ring portion and has two opposite respective circumferential ends (104A, 104B) open to the upstream.

5. Combustion chamber according to any of claims 1 to 4, wherein the main air collection chamber (100) is closed on the side opposite the annular casing (32).

6. Combustion chamber according to any of claims 1 to 5, further comprising a secondary air collection chamber (120), open to the upstream and closed to the downstream, arranged facing the downstream portion (102A) of the chimney (64), and wherein the downstream portion (102A) of the chimney comprises air passage orifices (121A) putting into direct communication the passage (68) and the secondary air collection chamber (120).

7. Combustion chamber according to claim 6, wherein the secondary air collection chamber (120) is in the form of a portion of a ring and has two opposite respective circumferential ends (120A, 120B) open to the upstream.

8. Combustion chamber according to claim 6 or 7, wherein the secondary air collection chamber (120) is arranged between the chimney (64) and a portion at least of the main air collection chamber (100).

9. Combustion chamber according to any of claims 1 to 8, wherein the annular casing (32) is formed at least by:
- an annular wall (80) provided with an orifice, and
- an annular flange (78) of an additional part (74), housed in the orifice of the annular wall (80), and
wherein the additional part (74) further comprises at least:
- a tubular wall (76) forming the chimney (64), and from which the annular flange (78) extends further away from the central axis (66) of the chimney, said annular flange (78) comprising the through-opening (106) or each through-opening, and
- the main air collection chamber (100).

10. Combustion chamber according to claim 9 taken in combination with claim 2 or 3, wherein the additional part (74) further comprises said region (112) of the annular casing to which the deflector (110) is connected, and the deflector (110).

11. Combustion chamber according to any of claims 9 and 10, taken in combination with any of claims 6 to 8, wherein the additional part (74) further comprises the secondary air collection chamber (120).

12. Turbomachine for an aircraft, comprising a combustion chamber (18) according to any of claims 1 to 11, and a penetrating part extending through the chimney (64).

13. Turbomachine according to claim 12, wherein the penetrating part is a spark plug (70).
